# EUROPÄISCHE PATENTSCHRIFT

(11) **EP 0 603 676 B1**
(45) Veröffentlichungstag und Bekanntmachung des Hinweises auf die Patenterteilung: **05.08.1998**
(21) Anmeldenummer: 93119953.3
(22) Anmeldetag: 10.12.1993
(51) Int. Cl.: B32B 27/08, A22C 13/00

(54) **Mehrschichtig coextrudierte, biaxial verstreckte, nahtlose Wursthülle mit verbesserter Sauerstoffbarriere**
Multi-layered co-extruded biaxially stretched seamless sausage casing with improved oxygen barrier
Boyau de saucisses multicouche coextrudé et étiré biaxialement sans soudure avec barrière à oxygène amélioré

(30) Priorität: 23.12.1992 DE 4243801; 01.03.1993 DE 4306274
(43) Veröffentlichungstag der Anmeldung: 29.06.1994
(73) Patentinhaber: WOLFF WALSRODE AKTIENGESELLSCHAFT, D-29699 Walsrode (DE)
(72) Erfinder: Hennig-Cardinal von Widdern, Michael, Dipl.-Ing., D-29664 Walsrode (DE); Reiners, Ulrich, Dr., D-29643 Neuenkirchen (DE)
(74) Vertreter: Braun, Rolf, Dr.

(56) Entgegenhaltungen:
- EP-A- 0 132 565
- EP-A- 0 248 585
- EP-A- 0 467 039
- EP-A- 0 530 538
- EP-A- 0 530 539
- EP-A- 0 530 549
- DE-A- 3 243 462
- US-A- 4 254 169

## Beschreibung

Die Erfindung betrifft eine mehrschichtig coextrudierte biaxial verstreckte, nahtlose Wursthülle mit verbesserter Sauerstoffbarriere, die aus Gründen der Haltbarkeitsdauer des Füllguts und des visuellen Eindruckes vom Zeitpunkt des Abfüllens bis zum Entfernen der Hülle ausreichende Barriereeigenschaften hinsichtlich Wasserdampf- und Sauerstoffpermeation aufweist. Beispiele für besonders geeignete Füllgüter sind: Brüh-und Kochwurst.

Einhergehend mit den Forderungen der Folienanwender nach Schlauchhüllen mit hoher Wasserdampf- und Sauerstoffbarrierewirkung bei reduziertem Materialeinsatz zeichnet sich in den vergangenen Jahren der Trend ab, Materialeigenschaften mittels mehrschichtiger Folienverbunde durch Coextrusion unterschiedlicher Polymere anforderungsgerecht zu kombinieren. Dabei setzen sich zunehmend Folienverbunde durch, die aufgrund der geforderten Maschinengangigkeit, Flexibilität und des Wunsches nach Rohstoffeinsparung Wandstarken zwischen 35 und 70 µm aufweisen.

Mehrschichtige biaxial verstreckte Polyamid/Polyolefinverbunde mit Durchmessern von 20 bis 150 mm werden nach dem heutigen Stand der Technik mit Wandstärken kleiner 65 µm hergestellt.

Dem Polyamid fällt bei derartigen Folienstrukturen neben der Gewährleistung der Sauerstoffbarriere die Aufgabe zu, die Anforderungen hinsichtlich hoher Durchstich- und Bruchfestigkeit bei geeigneter elastischer Verformbarkeit zu erfüllen. Das Polyolefin bewirkt bei derartigen Folienstrukturen die gewünschte Wasserdampfbarriere.

Insbesondere bei der Anwendung derartiger Folien für Füllgüter mit hoher Oxidationsneigung zeigte sich in der Vergangenheit häufig ein Nachteil der Sauerstoffbarriereschicht aus Polyamid.

Mit zunehmender Feuchtigkeitsaufnahme des Polyamids verringert sich die Sauerstoffbarrierewirkung des Polyamids, was besonders bei feuchten Füllgütern bzw. Lagerung der umhüllten Ware in einer feuchten Umgebung teilweise zu deutlich erkennbaren Oxidationserscheinungen an der Füllgutoberfläche führt. Da die Sauerstoffpermeabilität von Polyamid neben der Abhängigkeit zum Wassergehalt auch eine Abhängigkeit zur Temperatur aufweist, sind desweiteren in der Vergangenheit gerade auch während länger andauernder Sterilisationsbehandlungen häufig Oxidationserscheinungen an der Füllgutoberfläche beobachtet worden.

Neben des unerwünschten Effektes der verringerten Haltbarkeit des Füllgutes infolge der Sauerstoffeinwirkung wirkt die oxidierte Oberfläche des Füllgutes grau und die abgepackte Ware erscheint dem Endverbraucher als wenig frisch und somit unappetitlich.

Demzufolge ist es Aufgabe dieser Erfindung, eine biaxial verstreckte Hülle mit verbesserter Sauerstoffbarriere zur Verfügung zu stellen.

Die deutsche Patentanmeldung DE 4 017 046 beschreibt eine biaxial verstreckte coextrudierte Schlauchfolie für die Anwendung als Wursthülle.

Aus der Definition der 3-schichtig coextrudierten Hülle geht hervor, daß die innere, dem Füllgut zugewandte Schicht aus aliphatischem und/oder aromatischem (Co-)Polyamid besteht, die äußere Schicht aus aliphatischem (Co-)Polyamid und die Kernschicht aus Polyolefin mit haftvermittelnder Komponente.

Dieses Folienkonzept verspricht für die Anwendung als Wursthülle, abgesehen von einer unzureichenden Sauerstoffbarriere, ein zufriedenstellendes Eigenschaftsprofil. Die relativ hohe Sauerstoffdurchlässigkeit macht sich insbesondere während des Brühprozesses oxidationsempfindlicher Füllgüter bemerkbar. Aber auch während der Lagerung der abgepackten Ware ist die Sauerstoffbarriere der Hülle unzureichend, da die Feuchtigkeit des Füllgutes auf die innenliegende PA-Schicht übergeht und somit die Sauerstoffpermeation erhöht.

Ähnliche Schwächen hinsichtlich der Sauerstoffbarriere weist der Folienaufbau der deutschen Anmeldung DE 1 001 612 auf.

Während die innen- und außenliegende Schicht dieser biaxial verstreckten Folie aus aliphatischem Polyamid und/oder Copolyamid bestehen, umfaßt die Kernschicht der Folie ein teilaromatisches (Co-)Polyamid. Besonders nachteilig hierbei ist die fehlende Wasserdampfbarriere, so daß Feuchte aus dem Füllgut in jede der Polyamidschichten eindringt und damit deren Sauerstoffpermeabilität erhoht.

Aufgabe der nachfolgend beschriebenen Erfindung ist es, dem Anwender eine Hülle mit verbesserter Sauerstoffbarriere zur Verfügung zu stellen, wobei die reduzierte Sauerstoffpermeation während des gesamten Produktlebens, vom Abfüllvorgang bis zum Entfernen der Hülle durch den Endverbraucher, in zufriedenstellender Weise erhalten bleiben soll. Besonders kritische und damit beachtenswerte Stationen des Produktlebens sind der Prozeß der Wärmebehandlung in feuchter Umgebung und eine spätere Lagerung des Produktes bei Raumtemperatur. Diese genannten Klimabedingungen verursachen bei bekannten Hüllen aus Polyamid/Polyolefin-Folienverbunden, insbesondere bei oxidationsempfindlichen Füllgütern, visuelle und bakteriologische Schädigungen des Füllgutes.

Gegenstand der nachfolgend beschriebenen Erfindung ist eine mindestens 4-schichtig coextrudierte, biaxial verstreckte nahtlose Wursthülle mit mindestens einer innenliegenden und einer außenliegenden Schicht, die im wesentlichen aus aliphatischem Polyamid bestehen, dadurch gekennzeichnet, daß zwischen den innen- und außenliegenden Polyamidschichten mindestens eine Schicht vorliegt, die im wesentlichen aus Ethylen/Vinylalkohol-Copolymer besteht und mindestens einer weiteren Polymerschicht aus Polyethylen oder Polypropylen und/oder Ethylen- oder Propylen-basierenden Copolymeren zwischen der innenliegenden Polyamidschicht und mindestens einer EVOH-Schicht.

Überraschenderweise können durch das Einfügen einer dünnen Ethylen/Vinylalkohol (EVOH)-Copolymer-Schicht oxidative Prozesse an der Füllgutoberfläche deutlich reduziert werden, Dies überrascht umsomehr als die Sperrwirkung von EVOH-Schichten bekannterweise auch extrem vom Feuchtigkeitsgehalt des EVOH und der Temperatur des permeierenden Gases abhängt.

Eine deutliche Reduktion der oxidativen Proezesse ist bereits bei sehr dünnen EVOH-Schichtstärken von 2 bis 5 µm, sowohl nach dem Brühprozeß als auch nach 21-tägiger Lagerung der abgepackten Ware zu erkennen.

Das Ethylen-Vinylalkohol-Copolymer weist vorzugsweise einen Gehalt an Ethylen von 20 - 50 Gew.-% auf und der Verseifungsgrad des Ausgangsmaterials Ethylen-Vinylacetat-Copolymer beträgt mindestens 85 %.

Das Ethylen-Vinylalkohol-Copolymer kann als weitere olefinische Komponenten Propylen, Buten-1, Penten-1 oder 4-Methylpenten-1 enthalten.

Das Ethylen-Vinylalkohol-Copolymer kann auch mit anderen verträglichen Polymeren abgemischt sein, wobei der Anteil der Mischungskomponenten kleiner als 50 % (Gew.) ist.

Die Polyamidschichten können aus PA 6, PA 11, PA 12, PA 66 oder aliphatischem Copolyamid PA 6.66, PA 6.8, PA 6.9, PA 6.10, PA 6.11, PA 6.12, einem Copolymer aus den darin enthaltenen Monomereinheiten oder einer Mischung der vorgenannten aliphatischen Polyamide / Copolyamide bestehen.

Vorzugsweise enthält mindestens eine der PA-Schichten 70 bis 95 Gew.-% eines aliphatischen Polyamids und/oder Copolyamids und/oder Mischungen aus denselben und wenigstens ein
- (teil)-aromatisches PA oder COPA und/oder
- Ethylen- oder Propylen-basierendes Copolymer (EVA, EVOH, Ionomerharz, säuremodifizierte Ethylen- oder Propylen-Copolymere) und/oder
- (Co-)Polyester
   in Mengenanteilen von mindestens 3 bis höchstens 30 Gew.-%, bezogen auf das Gesamtgewicht des Polymergemisches.

Eine besondere Bedeutung erfährt dabei offensichtlich die wasserdampfsperrende Polymerschicht, die zwischen dem feuchten Füllgut und der EVOH-Schicht angeordnet ist. Diese wasserdampfsperrende Schicht reduziert vermutlich den vom Füllgut ausgehenden Wasserdampftransport in die EVOH-Schicht in ausreichender Weise, um ein Abtrocknen der EVOH-Schicht nach dem Brühprozeß sicherzustellen, Daraus wiederum resultiert für die EVOH-Schicht eine Reduktion der Sauerstoffpermeabilität.

Die Polymere, die die Aufgabe der Wasserdampfbarriere übernehmen, enthalten als Hauptkomponente Ethylen oder Propylen; es sind dies vorzugsweise typische Haftvermittler auf Basis von Ethylen und/oder Propylen mit funktionellen Säuregruppen. Es können aber auch Polymermischungen aus Polyethylen bzw. Ethylen-basierenden Copolymeren und/oder Polypropylen bzw. Propylen-basierenden Copolymeren und typischen Haftvermittlern auf Basis von Ethylen bzw. Propylen sein.

Besonders auffällig wird die verbesserte Sauerstoffbarriere der Hülle im anwendungstechnischen Test mit oxidationsempfindlichen Füllgütern, wie zum Beispiel Leberwurst. Der Füll- und der anschließende Lagertest eignen sich insofern besonders gut zur Charakterisierung der verbesserten Sauerstoffbarriere, da praxisrelevante unablässig veränderte Klimabedingungen bis hin zum Entfernen der Hülle durch den Endverbraucher, den Feuchtegehalt der Folie kaum einen stationären Zustand erreichen läßt. Dies hat unabänderlich zur Folge, daß die Sauerstoffpermeabilität der Hülle ständig variiert.

Die Beurteilung des Voranschreitens der oxidativen Prozesse wird durch visuelle Begutachtung der Füllgutoberfläche vorgenommen, wobei insbesondere farbliche Veränderungen der Füllgutrandschichten eine Rolle spielen.

Die Herstellung der biaxial verstreckten Schlauchfolie erfolgt vorzugsweise nach dem bekannten "double bubble-" bzw. nach dem "injected bubble-"Verfahren, bei denen zunächst das schlauchförmige Extrudat durch intensive Kühlung in den Festkörperzustand überführt wird.

Im weiteren Verlauf des Herstellungsprozesses wird der so erhaltene relativ dickwandige Schlauch (300 bis 500 µm) auf eine zur Festkörperverstreckung günstige Temperatur wiedererwärmt. Die Wiedererwärmung kann in einer oder mehreren Stufen zum Beispiel mittels heißer Luft, Heißdampf temperiertem Wasserbad oder Infrarot-Strahlern erfolgen.

Der biaxialen Verstreckung wird in einer bevorzugten Ausführung eine Thermofixierung angeschlossen, um die Dimensionsstabilität der Schlauchfolie in einem oder mehreren Schritten durch Temperaturbehandlung zu verbessern. Auch hierbei bieten sich als Wärmeträger heiße Luft, Heißdampf, temperierte Fluide und/oder Infrarot-Strahler an. Die Thermofixierung in Gegenwart von Wasser bzw, Wasserdampf bewirkt zudem infolge von temperaturbedingt rascher Wasseraufnahme der Polyamide ein Erweichen der Polyamidschichten und somit eine verbesserte Flexibilität der Folie.

Das Wickeln der biaxial gereckten Schlauchfolie wird bevorzugt mit changierenden Wicklern durchgeführt, um durch das seitliche Verlegen der Folie ein Aufbauen der Liegekanten zu verhindern. In einer besonders bevorzugten Ausführung wird der Folienschlauch zudem kontinuierlich um seine Längsachse gedreht, damit unvermeidliche Dickstellen nicht übereinandergelegt werden und somit Dickstellen auf der Rolle vermieden werden.

Beim Fertigprodukt beträgt die Summe aller Schichtdicken zwischen 35 und 70, bevorzugt 45 und 60 µm.

Der Gegenstand der Erfindung soll anhand der folgenden Beispiele nähr erläutert werden.

### Beispiele

Die im nachfolgenden aufgeführten Beispiele wurden an einer 5-Schicht-Schlauchfoliencoextrusionslinie realisiert. Das Plastifizieren und Homogenisieren der thermoplastischen Polymere erfolgte entsprechend der Polymerschichtenanzahl durch 4 oder 5 separate Extruder.

Die Beurteilung unterschiedlicher Schlauchfolienmuster hinsichtlich der Qualität der Sauerstoffbarriere wurde anhand anwendungstechnischer Fülltests vorgenommen, um die Gewährleistung für praxisrelevante Prüfbedingungen sicherzustellen.

Bei dieser vergleichenden anwendungstechnischen Prüfung werden die Schlauchfolienmuster (siehe Auswertungstabelle) mit feinem Leberwurstbrät gefüllt. Anschließend werden die umhüllten Würste für 1,5 Stunden bei einer Temperatur von 105°C im Gegendruckautoklaven gebrüht und nach dem üblichen Procedere weiterverarbeitet.

Ausgehend von der Zielsetzung einer verbesserten Sauerstoffbarriere wird nun das Voranschreiten der oxidativen Prozesse an der Füllgutoberfläche durch vergleichende visuelle Begutachtung nach folgendem Schema beurteilt:
A: Vergleichende Beurteilung der Brätvergrauung an der Oberfläche der umhüllten Würste:
   1. 24 Stunden nach dem Brühprozeß
   2. nach 10-tägiger Lagerung bei Raumtemperatur (23°C)
   3. nach 20-tägiger Lagerung bei Raumtemperatur (23°C)
B: Individuelle Beurteilung der Brätvergrauung an der Oberfläche der von der Hülle befreiten Wurst durch partielles Abschaben der Oberfläche und vergleichende Beurteilung der Bratfarbe zwischen ursprünglicher Oberfläche und der "frischen" Oberfläche, Die Lagerbedingungen und der Zeitpunkt für die Beurteilung stimmen mit denen von A überein.

In den nachfolgenden Beispielen werden für die in den coextrudierten Folienstrukturen eingesetzten Polymere folgende Abkürzungen verwendet:
- A1: Polyamid 6 (Durethan B 38 F von Bayer)
- A2: Copolyamid 6.66 (Ultramid C 35 von BASF)
- A3: teilaromatisches Polyamid (Nyref MXD 6 von Solvay)
- B1: Propylen-basierendes Copolymer mit aufgepfropften Maleinsäureanhydridgruppen (Admer QF 551 E von Mitsui, PO-HV = polyolefinischer Haftvermittler)
- XX1: Ethylen-Vinylalkohol-Copolymer (EVAL EP-F 101 BZ von Kuraray)

[Die Zahl hinter dem Punkt, z.BX A1.2, betrifft die Nummerierung der Schichten mit gleichem Polymer, in diesem Beispiel: 2. Schicht aus Durethan B 38 F, mit der Zählweise von der Schlauchinnenseite zur Schlauchaußenseite.]

### Beispiel 1 [PA6 / PO-HV / EVOH / PA6]

Aus dem Coextrusionswerkzeug tritt ein 4-schichtig coextrudierter schmelzeflüssiger Primärschlauch mit dem Aufbau (von innen nach außen)
A1.1 / B1.1 / XX1.1 / A1.2
aus und wird sowohl von außen als auch von innen mittels auf 10°C temperiertem Wasser abgekühlt und in die Festkörperform überführt.

Nach der Abkühlung weist der primärschlauch einen Durchmesser von 14 mm und folgende Schichtdickenverteilung (von innen nach außen) auf:
A1.1=180 µm / B1.1=63 µm / XX1.1=36 µm / A1.2=135 µm

Anschließend wird der Primärschlauch in einem auf 125°C temperierten Luftstrom wiedererwärmt und durch Einschluß einer Druckluftblase zwischen zwei luftdicht abschließenden Walzenpaaren um das 3-fache sowohl in Quer- als auch in Längsrichtung biaxial verstreckt.

Wiederum zwischen zwei dicht abschließenden Walzenpaaren durchläuft der biaxial verstreckte Schlauch eine auf 265°C temperierte Wärmebehandlungszone, wobei ein innen eingebrachtes Druckvolumenpolster weitgehend eine thermisch initiierte Durchmesserreduzierung verhindert.

Die so erhaltene Folie weist einen Durchmesser von 42 mm und eine Gesamtfolienstärke von 46 µm auf und wird vergleichend mit anderen Folienstrukturen gemäß oben definierter Vorgehensweise geprüft.

### Beispiel 2 [PA6.66 / PO-HV / EVOH / PO-HV / PA6.66]

Nach gleichem Verfahren wie in Beispiel 1 wird ein 5-schichtig coextrudierter Primärschlauch mit nachfolgend beschriebenem Aufbau (von innen nach außen) hergestellt;
A2.1 / B1.1 / XX1.1 / B1.2 / A2.2

Nach der Abkühlung weist der Primärschlauch einen Durchmesser von 16 mm und folgende Schichtdickenverteilung auf:
A2.1=260 µm / B1.1=42 µm / XX1.1=32 µm / B1.2=42 µm / A2.2=105 µm

Nach seiner Wiedererwärmung wird der Primärschlauch um das 3,2-fache sowohl in Quer- als auch in Längsrichtung verstreckt und anschließend thermofixiert.

Das Fertigprodukt weist einen Durchmesser von 50 mm und eine Gesamtstärke von 46 µm auf.

### Beispiel 3 [PA6.66 / EVOH / PO-HV / EVOH / PA6.66]

Wie im vorhergehenden Beispiel wird ein 5-schichtig coextrudierter Primärschlauch mit nachfolgend beschriebenem Aufbau (von innen nach außen) hergestellt:
A2.1 / XX.1. / B1.1 / XX1.2 / A2.2

Nach der Abkühlung weist der Primärschlauch einen Durchmesser von 16 mm und folgende Schichtdickenverteilung auf:
A2.1=260 µm / XX1.1=32 µm / B1.1=60 µm / XX1.2=32 µm/ A2.2=105 µm

Nach seiner Wiedererwärmung wird der Primärschlauch um das 3,2-fache sowohl in Quer- als auch in Längsrichtung verstreckt und anschließend thermofixiert.

Das Fertigprodukt weist einen Durchmesser von 51 mm und eine Gesamtstärke von 47 µm auf.

### Beispiel 4 [PA6 / PA6.66 / PO-HV / EVOH / PA6.66]

Wie in den vorstehenden Beispielen wird ein 5-schichtig coextrudierter Primärschlauch mit nachfolgend beschriebenem Aufbau (von innen nach außen) hergestellt:
A1.1 / A2.1 / B1.1 / XX1.2 / A2.2

Nach der Abkühlung weist der Primärschlauch einen Durchmesser von 16 mm und folgende Schlichtdickenverteilung auf:
A1.1=55 µm / A2.1=210 µm / B1.1=60 µm / XX1.2=32 µm/ A2.2=105 µm

Nach seiner Wiedererwärmung wird der Primärschlauch um das 3,2-fache sowohl in Quer- als auch in Längsrichtung verstreckt und anschließend thermofixiert.

Das Fertigprodukt weist einen Durchmesser von 51 mm und eine Gesamtstärke von 44 µm auf.

### Beispiel 5 [PA6.66 / PO-HV / PA6.66 / EVOH / PA 6.66]

Wie in den vorstehenden Beispielen wird ein 5-schichtig coextrudierter Primärschlauch mit nachfolgend beschriebenem Aufbau (von innen nach außen) hergestellt:
A2.1 / B1.1 / A2.2 / XX1.1 / A2.3

Nach der Abkühlung weist der Primärschlauch einen Durchmesser von 16 mm und folgende Schichtdickenverteilung auf:
A2.1=100 µm / B1.1=50 µm / A2.2=150 µm / XX1.1=32 µm/ A2.3=95 µm

Nach seiner Wiedererwärmung wird der Primärschlauch um das 3,2-fache sowohl in Quer- als auch in Längsrichtung verstreckt und anschließend thermofixiert.

Das Fertigprodukt weist einen Durchmesser von 51 mm und eine Gesamtstärke von 42 µm auf.

### Beispiel 6 [PA6/PO-HV/PA6/EVOH/PA6]

Wie in den vorstehenden Beispielen wird ein 5-schichtig coextrudierter Primärschlauch mit nachfolgend beschriebenem Aufbau (von innen nach außen) hergestellt:
A1.1/B1.1/A1.2/XX1.1/A1.3

Nach der Abkühlung weist der Primärschlauch einen Durchmesser von 14 mm und folgende Schichtdickenverteilung auf:
A1.1=45 µm / B1.1=45 µm / A1.2=135 µm / XX1.1=27 µm/ A1.3=180 µm

Nach seiner Wiedererwärmung wird der Primärschlauch um das 3-fache sowohl in Quer- als auch in Längsrichtung verstreckt und anschließend thermofixiert.

Das Fertigprodukt weist einen Durchmesser von 42 mm und eine Gesamtstärke von 48 µm auf.

### Vergleichsbeispiele

### V1: [PA / PO-HV / PA]

Es wird ein 3-schichtig coextrudierter Primärschlauch mit nachfolgend beschriebenem Aufbau (von innen nach außen) hergestellt:
A2.1 / B1.1 / A2.2

Nach der Abkühlung weist der Primärschlauch einen Durchmesser von 16 mm und folgende Schichtdickenverteilung auf:
A2.1=265 µm / B1.1=70 µm / A2.2=130 µm

Nach seiner Wiedererwärmung wird der Primärschlauch um das 3,2-fache sowohl in Quer- als auch in Längsrichtung verstreckt und anschließend thermofixiert.

Das Fertigprodukt weist einen Durchmesser von 51 mm und eine Gesamtstärke von 47 µm auf und wird vergleichend zu den erfindungsgemäßen Hüllen getestet (siehe Anlage).

### V2: [PA / teilaromatisches PA / PA]

Es wird ein 3-schichtig coextrudierter Primärschlauch mit nachfolgend beschriebenem Aufbau (von innen nach außen) hergestellt:
A2.1 / A3.1 / A2.2

Nach der Abkühlung weist der Primärschlauch einen Durchmesser von 16 mm und folgende Schichtdickenverteilung auf:
A2.1=265 µm / A3.1=50 µm / A2.2=140 µm

Nach seiner Wiedererwärmung wird der Primärschlauch um das 3,2-fache sowohl in Quer- als auch in Längsrichtung verstreckt und anschließend thermofixiert.

Das Fertigprodukt weist einen Durchmesser von 51 mm und eine Gesamtstarke von 46 µm auf und wird vergleichend zu den erfindungsgemäßen Hüllen getestet (siehe Anlage).

### V3: [PA 12]

In die vergleichenden anwendungstechnischen Tests wird auch eine 1-schichtig extrudierte, unverstreckte Schlauchfolie aus Polyamid 12 mit einbezogen, die nach dem bekannten Blasfolienverfahren hergestellt wird.

Das Polyamid 12 ist ein Polymer von Hüls (Vestamid 2106 F).

### Darstellung der Prüfergebnisse:

| A. Vergleichende Beurteilung der Brätvergrauung an der Oberfläche der umhüllten Würste | | | |
|---|---|---|---|
| Beispiel | Lagerdauer | | |
| | 1 Tag | 10 Tage | 20 Tage |
| 1 | 0 | 0 | 0 |
| 2 | 0 | 0 | 0 |
| 3 | 0 | 0 | 0 |
| 4 | 0 | 0 | 0 |
| 5 | 0 | 0 | 0 |
| 6 | 0 | 0 | 0 |
| V1 | 0 | 1 | 2 |
| V2 | 0 | 1 | 2 |
| V3 | 2 | 2 | 2 |
| 0 = keine erkennbare Brätvergrauung 1 = geringfügig erkennbare Brätvergrauung 2 = deutlich erkennbare Brätvergrauung | | | |

| B. Individuele Beurteilung der Brätvergrauung durch partielles Abschaben der Brät-Oberfläche | | | |
|---|---|---|---|
| Beispiel | Lagerdauer | | |
| | 1 Tag | 10 Tage | 20 Tage |
| 1 | 0 | 0 | 0 |
| 2 | 0 | 0 | 0 |
| 3 | 0 | 0 | 0 |
| 4 | 0 | 0 | 0 |
| 5 | 0 | 0 | 0 |
| 6 | 0 | 0 | 0 |
| V1 | 0 | 2 | 2 |
| V2 | 0 | 2 | 2 |
| V3 | 2 | 2 | 2 |
| 0 = keine erkennbare Brätvergrauung 1 = geringfügig erkennbare Brätvergrauung 2 = deutlich erkennbare Brätvergrauung | | | |

## Patentansprüche

1. Mindestens 4-schichtig coextrudierte, biaxial verstreckt, nahtlose Wursthülle mit mindestens einer innenliegenden und mindestens einer außenliegenden Schicht, die im wesentlichen aus aliphatischem Polyamid bestehen, dadurch gekennzeichnet, daß zwischen den innen- und außenliegenden Polyamid-Schichten mindestens eine Schicht vorliegt, die im wesentlichen aus Ethylen-Vinylalkohol (EVOH)-Copolymerem besteht und mindestens einer weiteren Polymerschicht aus Polyethylen oder Polypropylen und/oder aus Ethylen-und/oder Propylen-basierenden Copolymeren als Wasserdampfbarriere zwischen der innenliegenden Polyamid- und mindestens einer EVOH-Schicht.

2. Schlauchfolie nach Anspruch 1, dadurch gekennzeichnet, daß das Ethylen-Vinylalkohol-Copolymer einen Ethylen-Gehalt von 20 bis 50 Gew.-% aufweist und der Verseifungsgrad des Ausgangsmaterials Ethylen-Vinylacetat-Copolymer mindestens 85 % beträgt.

3. Schlauchfolie nach den Ansprüchen 1 oder 2, dadurch gekennzeichnet, daß das Ethylen-Vinylalkohol-Copolymer als weitere olefinische Komponenten, Propylen, Buten-1, Penten-1 oder 4-Methylpenten-1 enthält.

4. Schlauchfolie nach den Ansprüchen 1 bis 3, dadurch gekennzeichnet, daß das Ethylen-Vinylalkohol-Copolymer mit anderen mit dem Ethylen-Vinylalkohol-Copolymeren verträglichen Polymeren abgemischt wird, wobei der Gew.-Anteil der Mischungskomponente(n) kleiner als 50 % ist.

5. Schlauchfolie nach den Ansprüchen 1 bis 4, dadurch gekennzeichnet, daß die Polymere, die die Aufgabe der Wasserdampfbarriere übernehmen, als Hauptkomponente Ethylen oder Propylen enthalten.

6. Schlauchfolie nach den Ansprüchen 1 bis 5, dadurch gekennzeichnet, daß die Polymere, die die Aufgabe der Wasserdampfbarriere übernehmen, typische Haftvermittler auf Basis von Ethylen und/oder Propylen mit funktionellen Säuregruppen sind.

7. Schlauchfolie nach den Ansprüchen 1 bis 6, dadurch gekennzeichnet, daß die polymerschicht(en), die die Aufgabe der Wasserdampfbarriere übernehmen, aus einer Polymermischung aus Polyethylen bzw. Ethylen-basierenden Copolymeren und/oder Polypropylen bzw. Propylen-basierenden Copolymeren und typischen Haftvermittlern auf Basis von Ethylen bzw. Propylen besteht(en).

8. Schlauchfolie nach wenigstens einem der vorhergehenden Ansprüche, dadurch gekennzeichnet, daß die PA-Schichten aus PA 6, PA 11, PA 12, PA 66 oder aliphatischem Copolyamid PA 6.66, PA 6.8, PA 6.9, PA 6.10, PA 6.11, PA 6.12, einem Copolymer aus den darin enthaltenen Monomereinheiten oder einer Mischung der vorgenannten aliphatischen Polyamide/Copolyamide besteht.

9. Schlauchfolie nach wenigstens einem der vorhergehenden Ansprüche, dadurch gekennzeichnet, daß mindestens eine der PA-Schichten 70 bis 95 Gew.-% eines aliphatischen Polyamids und/oder Copolyamids und/oder Mischungen aus denselben und wenigstens ein
- (teil-)aromatisches PA oder COPA und/oder
- Ethylen- oder Propylen-basierendes Copolymer (EVA, EVOH, Ionomerharz, säuremodifizierte Ethylen- oder Propylen-Copolymere) und/oder
- (Co-)Polyester
in Mengenanteilen von mindestens 3 bis höchstens 30 Gew.-%, bezogen auf das Gesamtgewicht des Polymergemisches, enthalten.

10. Schlauchfolie nach wenigstens einem der vorhergehenden Ansprüche, dadurch gekennzeichnet, daß die Summe aller Schichtdicken beim Fertigprodukt zwischen 35 und 70, insbesondere 45 und 60 µm beträgt.

## Claims

1. Coextruded, biaxially oriented, seamless sausage casing of at least 4 layers and having at least one inner layer and at least one outer layer which substantially consist of aliphatic polyamide, characterised in that, between the inner and outer polyamide layers, there is at least one layer which substantially consists of ethylene/vinyl alcohol (EVOH) copolymers and at least one further polymer layer prepared from polyethylene or polypropylene and/or from copolymers based on ethylene and/or propylene as a water vapour barrier between the inner polyamide layer and at least one EVOH layer.

2. Tubular film according to claim 1, characterised in that the ethylene/vinyl alcohol copolymer has an ethylene content of 20 to 50 wt.% and the degree of saponification of the ethylene/vinyl acetate copolymer starting material is at least 85%.

3. Tubular film according to claim 1 or 2, characterised in that the ethylene/vinyl alcohol copolymer contains propylene, 1-butene, 1-pentene or 4-methyl-1-pentene as further olefinic components.

4. Tubular film according to claims 1 to 3, characterised in that the ethylene/vinyl alcohol copolymer is blended with other polymers compatible with the ethylene/vinyl alcohol copolymer, wherein the proportion by weight of the blend component(s) is less than 50%.

5. Tubular film according to claims 1 to 4, characterised in that the polymers assuming the water vapour barrier function contain ethylene or propylene as the principal component.

6. Tubular film according to claims 1 to 5, characterised in that the polymers assuming the water vapour barrier function are typical coupling agents based on ethylene and/or propylene with functional acid groups.

7. Tubular film according to claims 1 to 6, characterised in that the polymer layer(s) assuming the water vapour barrier function consist(s) of a polymer blend prepared from polyethylene or ethylene-based copolymers and/or polypropylene or propylene-based copolymers and typical coupling agents based on ethylene or propylene.

8. Tubular film according to at least one of the preceding claims, characterised in that the PA layers consist of PA 6, PA 11, PA 12, PA 66 or aliphatic copolyamide PA 6,66, PA 6,8, PA 6,9, PA 6,10, PA 6,11, PA 6,12, of a copolymer of the monomer units contained therein or of a blend of the above-stated aliphatic polyamides/copolyamides.

9. Tubular film according to at least one of the preceding claims, characterised in that at least one of the PA layers contains 70 to 95 wt.% of an aliphatic polyamide and/or copolyamide and/or blends thereof and at least one
- (partially) aromatic PA or coPA and/or
- copolymer based on ethylene or propylene (EVA, EVOH, ionomer resin, acid-modified copolymers of ethylene or propylene) and/or
- (co)polyester
in a proportion of at least 3 to at most 30 wt.%, relative to the total weight of the polymer blend.

10. Tubular film according to at least one of the preceding claims, characterised in that the sum of all the layer thicknesses in the finished product is between 35 and 70, in particular 45 and 60 µm.

## Revendications

1. Boyau pour saucisses sans soudures, soumis à un allongement biaxial, coextrudé pour obtenir au moins quatre couches, comprenant au moins une couche interne et au moins une couche externe qui sont constituées essentiellement par un polyamide aliphatique, caractérisé en ce que, entre les couches interne et externe en polyamide, est présente au moins une couche qui est constituée essentiellement d'un copolymère d'éthylène-alcool vinylique (EVOH), et au moins une couche polymère supplémentaire constituée de polyéthylène ou de polypropylène et/ou de copolymères à base d'éthylène et/ou de propylène, à titre de couche d'arrêt de la vapeur d'eau, entre la couche interne en polyamide et au moins une couche en EVOH.

2. Feuille tubulaire selon la revendication 1, caractérisée en ce que le copolymère d'éthylène-alcool vinylique présente une teneur en éthylène de 20 à 50% en poids et le degré de saponification du copolymère d'éthylène-acétate de vinyle utilisé comme matière de départ représente au moins 85%.

3. Feuille tubulaire selon les revendications 1 ou 2, caractérisée en ce que le copolymère d'éthylène-alcool vinylique contient, à titre de composants oléfiniques supplémentaires, du propylène, du butène-1, du pentène-1 ou du 4-méthylpentène-1.

4. Feuille tubulaire selon les revendications 1 à 3, caractérisée en ce qu'on mélange le copolymère d'éthylène-alcool vinylique avec d'autres polymères compatibles avec le copolymère d'éthylène-alcool vinylique, la fraction pondérale du ou des composants de mélanges étant inférieure à 50%.

5. Feuille tubulaire selon les revendications 1 à 4, caractérisée en ce que les polymères, qui reprennent à leur compte la fonction d'arrêt de la vapeur d'eau, contiennent, à titre de composant principal, de l'éthylène ou du propylène.

6. Feuille tubulaire selon les revendications 1 à 5, caractérisée en ce que les polymères, qui reprennent à leur compte l'effet d'arrêt de la vapeur d'eau, sont des adhésifs spécifiques à base d'éthylène et/ou de propylène contenant des groupes fonctionnels acides.

7. Feuille tubulaire selon les revendications 1 à 6, caractérisée en ce que la ou les couches polymères, qui reprennent à leur compte l'effet d'arrêt de la vapeur d'eau, est ou sont constituées par un mélange polymère de polyéthylène, respectivement de coplymères à base d'éthylène et/ou de polypropylène, respectivement de copolymères à base de propylène, et par des adhésifs spécifiques à base d'éthylène, respectivement de propylène.

8. Feuille tubulaire selon au moins une des revendications précédentes, caractérisée en ce que les couches en PA sont constituées par du PA 6, du PA 11, du PA 12, du PA 66 ou par le copolyamide aliphatique PA 6.66, PA 6.8, PA 6.9, PA 6.10, PA 6.11, PA 6.12, par un copolymère obtenu à partir des unités monomères qu'il contient ou encore par un mélange des polyamides/copolyamides aliphatiques susmentionnés.

9. Feuille tubulaire selon au moins une des revendications précédentes, caractérisée en ce qu'au moins une des couches en PA contient, à concurrence de 70 à 95% en poids, un polyamide et/ou un copolyamide aliphatiques et/ou des mélanges de ces derniers, et au moins
- un PA ou un COPA (partiellement) aromatique et/ou
- un copolymère à base d'éthylène ou de propylène (EVA, EVOH, résine ionomère, copolymères d'éthylène ou de propylène modifiés par un acide) et/ou
- un (co)polyester,
dans des proportions d'au moins 3 à 30% en poids au maximum rapportés au poids total du mélange polymère.

10. Feuille tubulaire selon au moins une des revendications précédentes, caractérisée en ce que la somme des épaisseurs de toutes les couches dans le produit fini se situe entre 35 et 70, en particulier entre 45 et 60 µm.
